# EUROPEAN PATENT APPLICATION

(11) **EP 1 174 962 A2**
(43) Date of publication of application: **23.01.2002**
(21) Application number: 01306056.1
(22) Date of filing: 13.07.2001
(51) Int. Cl.: H01R 24/06

(54) **Improvements to electrical plugs and sockets**

(30) Priority: 14.07.2000 GB 0017292; 15.12.2000 GB 0030586
(71) Applicant: Strand, Anthony, Buckinghamshire HP16 0QY (GB)
(72) Inventor: Strand, Anthony, Buckinghamshire HP16 0QY (GB)
(74) Representative: Whitaker, Iain Mark

(57) **Abstract**

In combination an electrical plug and associated electric power socket, there being provided on one of said electrical plug and electric power socket or there between, when coupled together, in use, a support structure that is supported by the plug and/or socket and that has a receptacle to receive a small electrical appliance such as a mobile phone, electric shaver, dictaphone or the like small lightweight appliance, therein or thereon.

## Description

### Field of the Invention

The present invention concerns improvements in and relating to electrical plugs and sockets and is of particular relevance to their use with small electrical appliances.

### Background to the Invention

Small electrical appliances such as mobile telephones and electric shavers are commonly powered by rechargeable battery so that they may be used with complete freedom of any mains power cable but avoiding the need for regular replacement of batteries. Only at intervals do the electrical appliances need to be linked by cable to an electric mains power socket for recharging. Nevertheless, when the appliances do need to have their storage cells re-charged the very attributes that make them so readily portable, their compact size and light weight, render them vulnerable to accidental damage. Shavers, mobile phones and the like small lightweight portable electrical appliances are quite frequently knocked from table tops or other work surfaces where they are laid to rest while re-charging. In some cases the cable is sufficiently heavy or resilient to pull or push the appliance away from its rest position and in many cases the cable is liable to be snagged by a passing person leading to the appliance plunging to the ground and being severely damaged.

Indeed, the electrical appliance need not necessarily be a re-chargeable one, many mains powered electric shavers or portable dictaphones are also vulnerable to dislodgement and damage when plugged in but not in use.

Despite the significance of this problem area, to the best of the applicants knowledge no-one has previously effectively addressed the problem.

### Summary of the Invention

According to a first aspect of the present invention there is provided in combination an electrical plug and associated electric power socket, there being provided on one of said electrical plug and electric power socket or there between, when coupled together, in use, a support structure that is supported by the plug and/or socket and that has a receptacle to receive a small electrical appliance such as a mobile phone, electric shaver, dictaphone or the like small lightweight appliance, therein or thereon.

The support structure is suitably formed of an insulating material and may be formed of a similar plastics polymer material to the electric plug or to the fascia of the electric power socket. In preferred embodiments the support structure and receptacle may be integral to the plug or socket formed for example during the process of moulding the plug or the socket fascia.

In a particularly preferred embodiment that is suited for use as a retrofit, the receptacle may be formed on a separate support structure that is adapted to be sandwiched between the plug and socket when the plug and socket are coupled together to hold the receptacle above, below or to the side of the plug and socket combination. In this arrangement the support structure may be a plate of plastics or other electrically insulating material that may be sandwiched between the plug and socket and which has apertures there through to allow the pins of the plug to pass there through into the socket. The receptacle may be a shelf or tray or the like which projects from the support structure above, below or to the side of the plug and socket combination.

Suitably the shelf or tray is pivoted to the support structure to be able to move from a position which is suitably substantially co-planar or plane parallel with the support structure to a position in which the shelf is deployed for use.

The receptacle may have formed thereon a protrusion around which the cable of an electrical appliance may be wound and may be provided with a notch to grip a cable of an electrical device.

Preferably for recessed electrical sockets the support structure has a portion that is shaped to fit within the recess of the socket and is correspondingly recessed on the converse face thereof to receive a plug for the electrical socket.

The support structure may have an aperture therein that is shaped to receive a leading end of an electrical plug (behind the pins of the plug) projecting there through as a substantially close fit to stablely secure the support structure in place.

The shelf or tray or the like is suitably pivoted to the lower most in use edge of the support structure particularly usefully in the context of plugs that are not fully secure in their fitment to the socket.

Suitably the shelf or tray or the like is provided with a peripheral ridge or lip to assist in retaining any electrical appliance positioned on the shelf, tray or the like.

For use with circular plugs such as are common in continental Europe, for example, the support structure may comprise a clip or band or other structure that is adapted to fit around the circumference of the plug to hold the receptacle in place.

According to a second aspect of the present invention there is provided an electric plug, electric power socket or separate support structure to be clipped to or sandwiched between an electric plug and power socket, in use, and having a support structure with a receptacle to receive a small electrical appliance such as a mobile phone, electric shaver, dictaphone or the like therein or thereon.

Preferably the receptacle is adapted to grip the appliance and may suitably have adjustable or resilient gripping means.

Where the receptacle is borne by the plug or by an intermediate support structure sometimes the loose coupling of plug and socket (as occurs commonly in continental Europe) may be so loose as to undermine the stability of the receptacle in supporting an electrical appliance. To this end, preferably the plug or intermediate support structure, if present, is provided with releasable securing means to releasably secure the plug or intermediate support structure to the socket.

In one particularly preferred embodiment, the releasable securing means may comprise suction means. This suction means may, for example, be of a type in which air is withdrawn from or re-introduced into a cavity of a suction pad between the face plate of the power socket and the mating face of the plug or intermediate support structure by a plunger means. Indeed, the use of a releasable securing means comprising a suction means mounted between an electrical plug and co-operating electrical power socket is believed to be wholly original and patentably inventive in its own right.

### Brief Description of the Drawings

Preferred embodiments of the present invention will now be more particularly described, by way of example, with reference to the accompanying drawings, wherein:
Figures 1A and 1B are front elevation views of first and second variants of a first embodiment of the present invention;
Figures 2A and 2B are frontal perspective views of minor modifications of the variants illustrated in Figures 1A and 1B, respectively;
Figure 3 is a frontal perspective view of an embodiment of the present invention that is adapted for use with cylindrical electrical plugs of the type generally used in continental Europe.
Figure 4A is a front elevation view of a third embodiment of the invention having a hinged support shelf and with the shelf raised. Figure 4B is a side elevation view of the same. Figure 4C is a rear elevation view corresponding to Figure 4A. Figure 4D is a diagrammatic side elevation view like Figure 4B but showing the device mounted to a transformer plug and with the shelf in both raised and deployed positions.
Figure 5A is a front elevation view of a variant of the third embodiment but which is suitable for use with two pin plugs, and Figures 5B and 5C are side and rear elevation views, respectively, of the same. Figures 5D, 5E and 5F show a front elevation view of a conventional two pin plug socket, an end elevation view of a two pin plug and a plan view of the front part of the two pin plug.
Figure 6A is a front elevation view of a fourth embodiment of the invention with shelf in the deployed state, Figure 6B is a side elevation view of the fourth embodiment showing the shelf in raised and deployed positions and Figure 6C is a plan view from above with the shelf deployed.
Figure 6d shows a variant of the fourth embodiment which has a selectably mountable shelf for user selection of whether the shelf is above or below the plug socket.

### Description of the Preferred Embodiments

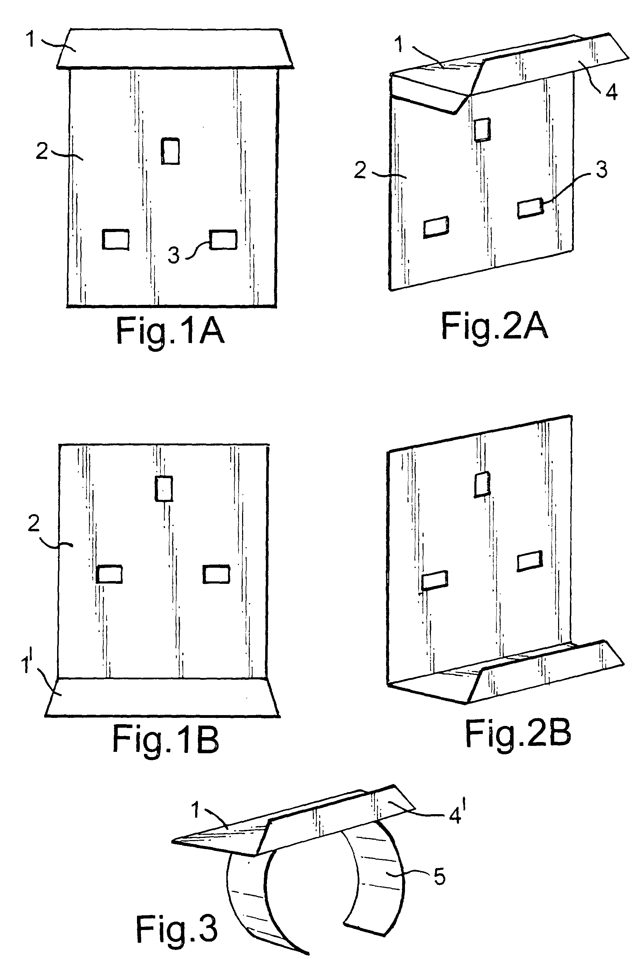

Figure 1A illustrates a first embodiment of the invention which comprises a shelf 1 to serve as a receptacle for a small electrical appliance such as a mobile phone or re-chargeable electric shaver and where the shelf 1 projects substantially perpendicularly from a support structure which comprises a back plate 2. The shelf 1 and back plate 2 are integrally moulded from a suitable plastics polymer for strength, robustness and cost economy of manufacture.

The back plate 1 is suitably less than 5mm thick and is perforated by apertures 3 through which the electrical contact pins of an electrical plug are passed when the electrical plug is coupled to a ring mains electrical power socket. The back plate 2 is thereby sandwiched between an electrical plug and electrical power socket to be held rigidly in place presenting the receptacle shelf 1 directly above the power plug to support the small electrical appliance whilst it is being re-charged from the electrical power socket.

Construction of the backing plate 1 of a plastics polymer renders it electrically insulating, avoiding any risk of conduction of electricity from the electrical plug pins to present an electrical safety hazard. Alternatively, however, if the backing plate 2 were not itself wholly made of electrically insulating material it would either need to be constructed such that the apertures 3 are at least lined by electrically insulating material or avoiding any part of the backing plate 2 coming into proximity with the pins of the electrical plug. In the illustrated preferred embodiment of the present invention the apertures 3 are configured to closely accommodate the pins of the electrical plug to improve the rigidity of mounting of the receptacle 1 and support structure 2.

The variant illustrated in Figure 1A has a top-mounted shelf 1 and the variant illustrated in Figure 1B has a bottom mounted shelf 1'. In the latter case the shelf 1' suitably extends significantly further than the top mounted shelf 1 in order that it may project beyond the base of the plug sufficiently to provide the necessary capacity to hold the appliance adjacent the plug.

In the variants illustrated in Figures 1A and 1B the shelf 1 is illustrated as substantially perpendicular to the back plate 2. However, this is not the optimal configuration for securing the appliance in place. Accordingly, the surface of the shelf 1 is suitably adapted to have a relatively high co-efficient of friction to grip the appliance. In another alternative, the shelf 1 may be inclined toward the wall on which the power socket is mounted to effectively trap the appliance between the shelf 1 and the wall. The shelf 1 may be inclined toward the wall by an upturn towards its front edge. Figures 2A and 2B illustrate shelves 1 that are provided with upturned front edges 4 to serve as a front retaining wall to hold the appliance in place.

In further preferred embodiments of the invention, not illustrated, the receptacle shelf 1 is formed with both front 4 and end walls to surround and retain the appliance in place.

To provide optimal retention, the receptacle 1 is suitably provided with resilient and/or adjustable gripping means. One example of such gripping means is to have the front portion of the shelf 1 with upstanding wall 4 illustrated in Figure 2A capable of being retracted back toward the packing plate 2 in discrete steps, for example, on a sliding ratchet mechanism, or in a way that is lockable at the desired position of extension/retraction of the shelf front to firmly hold the appliance in place.

An alternative configuration would be to have the front wall 4 of the shelf 1 inclined rearwardly and being sufficiently resiliently flexible to be flexed outwardly to allow the appliance to be inserted and then resiliently returning to its inclined configuration to grip the appliance in place.

Turning to the Figure 3 embodiment, this has a shelf 1 with front wall 4 and where the shelf 1 is mounted on a support structure that is formed as an arcuate clip 5 that is adapted to slide over or snap fasten around the cylindrical body of a cylindrical electrical plug.

Since continental type plugs, especially, are in some cases relatively loose-fitting additional measures may be necessary to enhance the security and integrity of the fitment to present the shelf 1 in the optimal stable and secure manner.

As proposed earlier herein above, the plug itself or, where there is an intervening support structure that supports the shelf 1, the support structure may need to be fastened more securely to the power socket. For this purpose, one or more releasable fastening means may be provided between the plug ( or intervening support structure 2,) and the power socket. In the preferred embodiment this may comprise one or more suction pads not shown. These suction pads should be of a type that does not require moistening to operate effectively and particularly preferably adapted to be engaged or disengaged by use of a plunger to increase or reduce the suction exerted by the suction pad(s).

Although the present invention has been described above with respect to the figures in which the preferred embodiments comprise intervening support structures carrying a respective shelf, it will be appreciated that the plug or the corresponding power socket may be adapted to comprise an integral support structure and shelf/receptacle for the electrical appliance. For example, a shelf may be moulded directly to project from a plug socket fascia or from the top surface of an electrical plug. Indeed, the plug/transformer plug that is normally packaged with a rechargeable appliance such as a mobile phone may be pre-formed to have the built in shelf or other receptacle for this specific electrical appliance to be recharged. This enables the receptacle to be dimensioned to ideally suit the appliance in question.

Although the various illustrations and embodiments discussed above predominantly comprise top or bottom mounted shelves, the shelf may be configured to project laterally from the plug or socket or intervening support structure. Furthermore, the receptacle need not necessarily comprise a shelf or tray or the like it may, alternatively, for example, comprise a clip structure into which the appliance may be mounted.

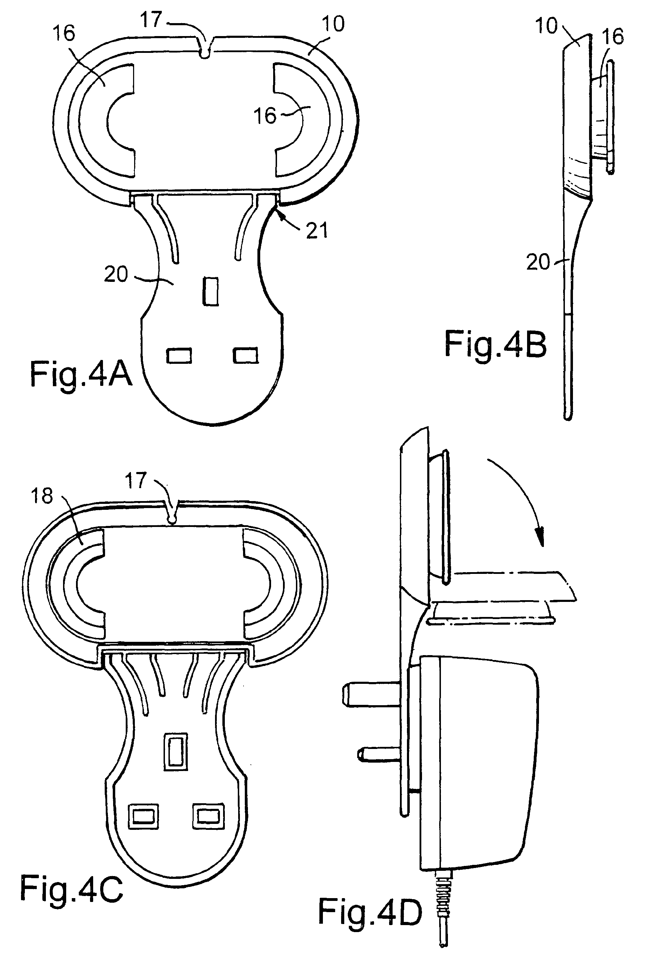

Referring now to Figures 4A - D, the third embodiment of the invention is illustrated which, in common with the first embodiment, is adapted to have a back plate portion 20 sandwiched between plug and plug socket and has a shelf portion 10. Here, however, the shelf portion 10 is pivoted by a pivot pin 21to the back plate 20 so that in one position for storage it lies substantially co-planar with the back plate 20, as illustrated in figures for 4A-C, but in another position tilted to be substantially perpendicular to the back plate 20 it is deployed for use - as illustrated in Figure 4D. The shelf 10 is supported in the perpendicular operative configuration by abutment of part of the shelf 10 against part of the back plate 20. This may involve ribs 15 provided on the face of the shelf 10 that initially faces forwardly and when deployed faces downwardly.

A further structural feature provided on this front/underside face of the shelf 10 is a winding structure 16 comprising a pair of spaced apart generally semi-circular ridges around which the cable of an electrical appliance may be wound. A notch 17 is provided in one edge of the shelf 10 again having a cable tidy function, the cable being gripped within the notch 17.

The cable tidy structure 16 may suitably be press-formed from the plastics polymer of the shelf portion 10 so that the upper, in use, face of the shelf 10 has semi-circular recesses 18 where the underside in use, face of the shelf 10 has ridges 16.

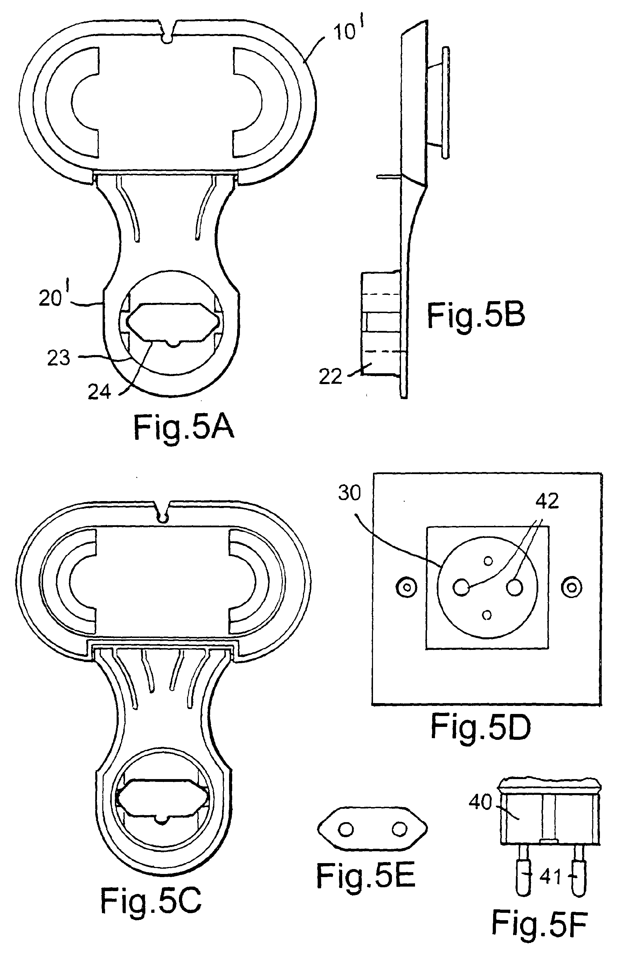

Referring to Figures 5A-F, these show a variant of the third embodiment in which the backing plate 20, is adapted for use with two pin plugs of the type used in continental Europe or in the United States, for example. The head of such a two pin plug is illustrated in figures 5E and 5F and a conventional socket for such a plug illustrated in Figure 5D.

The plug socket 30 illustrated in Figure 5D has a substantial circular recess 30 into which the leading part of the plug 40 fits with its pins 41 in the pin holes 42. The back plate 20' is moulded to closely fit into the recess 30. A circular cylindrical protrusion 22 is press-formed from the backing plate 20', and is dimensioned to fit closely in a nesting fashion within the circular recess 30 of the plug socket. This circular cylindrical protrusion 22 presents a corresponding circular recess 23 on its front face that will accommodate the front part of the two pin plug 40. Indeed, the floor of the recess 23 has an aperture 24 that corresponds to the end profile of the two pin plug so that the plug 40 may be even more closely mounted to the backing plate 20'. By this means the backing plate 20' mounts securely and firmly to the two pin plug 40 and securely supports the shelf 10' which, as with the second embodiment, is deployed by pivoting from its initially raised state co-planar with the backing plate 20' to its in-use position perpendicular to the backing plate 20'.

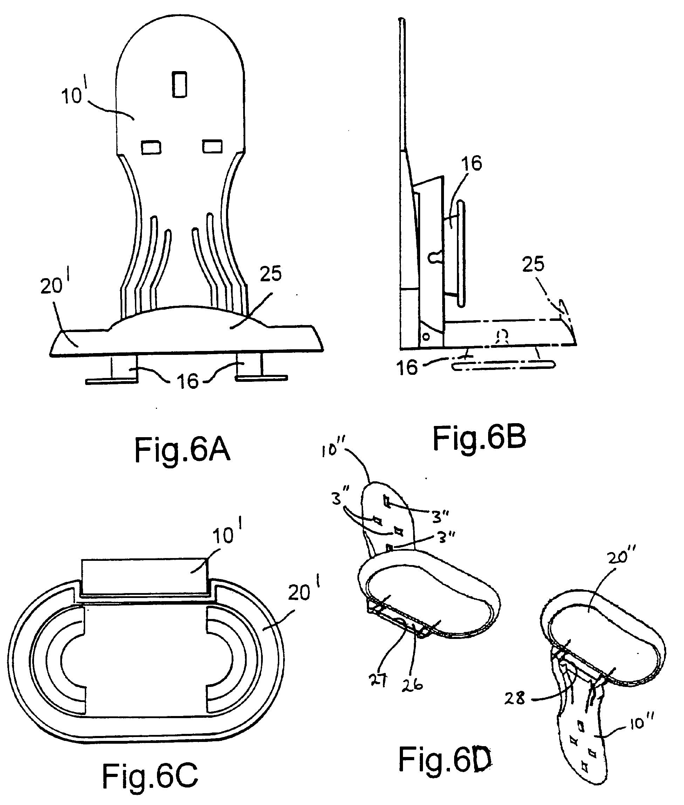

Turning finally to figures 6A-6C, the fourth embodiment illustrated here is similar to the third embodiment but differs in that it is configured with the shelf 20' depending not from the upper edge but from the lower edge of the backing plate 10'. Again, the shelf 20' is pivoted to the backing plate 10' to be movable from its raised rest state, which is in this case plane parallel to the backing plate 10', to its lowered deployed state. The deployed state is shown in figure 6A and 6C and in ghost line in 6B.

The shelf 20' has a front lip 25 to retain the electrical appliance on the shelf 20'. As with any of the preceding embodiments, the shelf 20' suitably is further lined with a material that will grip the electrical appliance, such as a rubbery material.

The fourth embodiment has particular value for use in situations where the fitment of the plug to the socket is not entirely secure and may be especially useful with two pin plug arrangements. Since the weight of any electrical appliance rested upon the shelf 20' is transmitted directly to the lower end of the backing plate 10' there is less leverage of the backing place 10' away from the socket, making the assembly substantially more secure.

Turning now to figure 6D, this illustrates a variant of the figure 6 embodiment which is adapted to give the user the ability to select whether the shelf 20" projects from above the plug or from below. The shelf 20 " is suitably either demountable from the backing plate 10", or is supplied separate from it in kit form to allow the user to select its mounting configuration when he assembles it for use.

As can be seen from figure 6D, the backing plate 10" is perforated with four electric plug pin apertures 3" to allow for the fact that the backing plate 10" must be able to mount over the three pins of the plug in either vertical orientation. Furthermore, the pivotal mounting of the shelf 20" to the backing plate 10" is configured with a detent arrangement on the backing plate 10" that will hold the shelf 20" in its deployed configuration in either mounting position of the shelf 20" to the backing plate 10". A lug 26, which is suitably arcuate, projects from the rear edge of the shelf 20" and comes into abutment with a detent face 27 on the backing plate 10" when the shelf 20" is lowered into its deployed state beneath the plug or against a similar detent 28 on the backing plate 10" when the shelf 20" is deployed in the position above the plug.

For optimal structural integrity, it is preferred that the shelf 20" is not demountable from the backing plate 10", but instead supplied separately from it and has a pair of pivot pin means/axle stubs which snap fit into corresponding pivot pin sockets provided on the backing plate 10".

## Claims

1. In combination, an electrical plug and associated electric power socket, there being provided on one of said electrical plug and electric power socket or there between, when coupled together, in use, a support structure that is supported by the plug and/or socket and that has a receptacle to receive a small electrical appliance such as a mobile phone, electric shaver, dictaphone or the like small lightweight appliance, therein or thereon.

2. An electrical plug and socket, the support structure being formed of an electrically insulating material.

3. An electrical plug and socket as claimed Claim 1 or 2 wherein the receptacle is formed on a separate support structure that is adapted to be sandwiched between the plug and socket when the plug and socket are coupled together to hold the receptacle above, below or to the side of the plug and socket combination.

4. An electrical plug and socket as claimed in Claim 1 or 2 wherein the support structure and receptacle are integral to the plug or socket

5. An electrical plug and socket as claimed in Claim 3 wherein the support structure is a plate of plastics or other electrically insulating material that is sandwiched in use between the plug and socket and which has apertures there through which the pins of the plug pass into the socket.

6. An electrical plug and socket as claimed in any preceding claim wherein the receptacle is a shelf or tray or the like which projects from the support structure above, below or to the side of the plug and socket combination.

7. An electrical plug and associated socket as claimed in Claim 6, wherein the shelf or tray is pivoted to the support structure to be able to move from a position which is substantially co-planar or plane parallel with the support structure to a position in which the shelf is deployed for use.

8. An electrical plug and socket as claimed in any preceding claim wherein the receptacle has formed thereon a protrusion around which the cable of an electrical appliance may be wound.

9. An electrical plug and socket as claimed in any preceding claim, wherein the receptacle is provided with a notch to grip a cable of an electrical device.

10. An electrical plug and socket as claimed in Claim 4, wherein the support structure has a portion that is shaped to fit within a recess of a recessed electrical socket and is correspondingly recessed on the converse face thereof to receive a plug for the electrical socket.

11. An electrical plug and socket as claimed in Claim 6 or Claim 10 wherein the support structure has an aperture therein that is shaped to receive a leading end of an electrical plug (behind the pins of the plug) projecting there through as a substantially close fit to stablely secure the support structure in place.

12. An electric plug and socket as claimed in claim 7 wherein the shelf is selectably mountable to the support structure to be mounted above or below the socket.

13. An electrical plug and socket as claimed in Claim 7, wherein the shelf or tray or the like is pivoted to the lower most in use edge of the support structure.

14. An electrical plug and socket as claimed in Claim 7, wherein the shelf or tray or the like is provided with a peripheral ridge or lip to assist in retaining any electrical appliance positioned on the shelf, tray or the like.

15. An electrical plug and associated electric power socket as claimed in any preceding claim wherein the electric power socket is a ring mains electric power socket.

16. An electrical plug and socket as claimed in Claim 1, 2 or 6 to use with circular plugs, the support structure comprising a clip or band or other structure that is adapted to fit around the circumference of the plug to hold the receptacle in place.

17. An electric plug, electric power socket or separate support structure to be clipped to or sandwiched between an electric plug and power socket or between a power socket fascia and power socket in use, and having a support structure with a receptacle to receive a small electrical appliance such as a mobile phone, electric shaver, dictaphone or the like therein or thereon.

18. An electric plug, power socket or separate support-structure as claimed in Claim 17, wherein the receptacle is adapted to grip the appliance and may have adjustable or resilient gripping means.

19. An electric plug, power socket or separate support structure as claimed in Claims 17 or 18 wherein the plug or intermediate support structure, if present is provided with releasable securing means to releasably secure the plug or intermediate support structure to the socket.

20. An electric plug, power socket or separate support structure as claimed in Claim 19, wherein the releasable securing means comprise suction means.

21. An electrical plug and socket having releasable securing means comprising a suction means between the electrical plug and the co-operating electrical power socket.
